# EUROPÄISCHE PATENTSCHRIFT

(11) **EP 2 430 415 B1**
(45) Veröffentlichungstag und Bekanntmachung des Hinweises auf die Patenterteilung: **27.05.2020**
(21) Anmeldenummer: 10718218.0
(22) Anmeldetag: 11.05.2010
(51) Int. Cl.: G01J 3/02, G01J 3/28, G01J 3/44, G02B 21/00

(54) **MINIATURISIERTES KONFOKALES SPEKTROMETER**
MINIATURISED CONFOCAL SPECTROMETER
SPECTROMETRE CONFOCAL MINIATURISE

(30) Priorität: 16.05.2009 DE 102009021637
(43) Veröffentlichungstag der Anmeldung: 21.03.2012
(73) Patentinhaber: INSION GmbH, 74076 Heilbronn (DE)
(72) Erfinder: SCHOENFELDER, Sven, 55216 Ingelheim Am Rhein (DE); BABLICH, Andreas, 55216 Ingelheim Am Rhein (DE); BAXMANN, Dirk, 55216 Ingelheim Am Rhein (DE); KENNEDY, Robert, James, 55216 Ingelheim Am Rhein (DE)
(74) Vertreter: Simon, Elke Anna Maria
(86) Internationale Anmeldenummer: PCT/EP2010/056495
(87) Internationale Veröffentlichungsnummer: WO 2010/133485

(56) Entgegenhaltungen:
- EP-A2- 1 906 225
- DE-A1- 10 010 514
- DE-A1-102005 043 627
- US-A- 5 813 987

## Beschreibung

Die Erfindung betrifft ein miniaturisiertes konfokales Spektrometer mit integrierter Beleuchtungsvorrichtung für von einem optisch aktiven Objekt emittierte Strahlung.

Die Erfindung bezweckt, die mit bekannten miniaturisierten Spektrometern bisher erreichte Empfindlichkeit zu erhöhen und das Einsatzgebiete derartiger Spektrometer für Strahlungsquellen geringer Intensität - wie zum Beispiel für rückwärts streuende Objekte mit lichtinduziertem Emissionspektrum wie Raman-Streuung oder Fluoreszenzstrahlung von Molekülen oder Atomen - zu erweitern, auch wenn die zur Verfügung stehende Substanzmenge im Bereich von Mikrogramm oder Nanogramm liegt.

Bei konfokalen optischen Geräten - wie Mikroskopen und Spektrometern - liegt der ausgangsseitige Brennpunkt des Beleuchtungsstrahlenganges im eingangsseitigen Brennpunkt des Abbildungs- oder Detektionsstrahlenganges. Die optische Achse dieses Strahlenganges kann mit der Achse des Beleuchtungsstrahlenganges übereinstimmen, oder beide Achsen können gegeneinander geneigt sein.

Ein Beispiel für eine konfokale Anordnung zeigt die US5813987 A, die auf Instrumente gerichtet ist, mit denen Strahlungssignale erzeugt und detektiert werden können. Hierbei werden Sonden verwendet, welche die Signale von Volumen-Elementen (z.B. Gewebeproben) sammeln. In einigen Ausführungsformen werden die Optiken zur Beleuchtung und zur Signalsammlung durch die gleichen Elemente gebildet, wobei Filter oder Strahlteiler dazu verwendet werden, den Beleuchtungsstrahlengang vom Sammelstrahlengang aufzutrennen. So wird anhand eines Ausführungsbeispiels eine optische Sonde offenbart, die an einen Lichtleiter angeschlossen ist, in den mittels eines Strahlteilers konfokal Laserlicht (beispielsweise von einem Helium-Neon-Laser) eingeleitet bzw. von der Sonde aufgenommenes Licht zu einem Detektor geleitet wird. Bei dem Signal handelt es sich um Fluoreszenzstrahlung, die in einem breiten Wellenlängenbereich größer 670 Nanometer auf einen Photomultiplier als Detektor geleitet wird, an dem die detektierte Fluoreszenzstrahlung gesammelt in ein elektrisches Signal umgewandelt wird.

Die DE10 2005043627A1 zeigt ein Verfahren zur optischen Abstandsmessung nach dem chromatischen konfokalen Abbildungsprinzip, bei dem das von einer Messoberoberfläche remittierte Licht wellenlängenselektiv ausgewertet wird, wobei zusätzlich zu einem abstandsabhängigen Spektrum eine spektrale Reflexion getrennt auf einem zweiten Empfänger erfasst und zur Korrektur verwendet wird, so dass die Abstandswerte daraus errechnet werden können. Die gezeigte Ausführungsform weist eine Beleuchtungseinheit auf, bei der ein beispielsweise über mehrere Leuchtdioden erzeugtes Wellenlängenspektrum über eine Multimodelichtleitfaser zugeführt wird, deren Lichtaustrittsfläche näherungsweise als Punktlichtquelle im Brennpunkt einer Kollimatoroptik angeordnet ist. Das kollimierte Beleuchtungslichtspektrum passiert einen Strahlteiler und wird mit einer Abbildungsoptik aus mehreren diffraktiven Einzellinsen mit Farblängenfehlern auf der Oberfläche abgebildet. Das reflektierte bzw. remittierte Licht wird von der Abbildungsoptik erfasst und über den Strahlteiler zur Detektionsoptik geführt.

Miniaturisierte Geräte mit konfokaler Anordnung des Beleuchtungsstrahlenganges und des Detektionsstrahlenganges sind bekannt. Im Allgemeinen umfasst der Beleuchtungsstrahlengang eine Lichtquelle, eine Lochblende, einen Kollimator, ein Bandpassfilter, einen dichroitischen Strahlteiler und eine Sammellinse. Die Lochblende liegt im eingangsseitigen Brennpunkt des Kollimators. Die Sammellinse bildet die Lochblende im ausgangsseitigen Brennpunkt des Beleuchtungsstrahlengangs ab. Der Brennpunkt liegt auf oder in dem zu untersuchenden Objekt. Die Achse des dichroitischen Strahlteilers ist gegen die Achse des Beleuchtungsstrahlenganges geneigt.

Der Detektionsstrahlengang beginnt im ausgangsseitigen Brennpunkt der Sammellinse (konfokale Abbildung). Die optische Achse des Detektionsstrahlenganges läuft zunächst durch die Sammellinse am Ende des Beleuchtungsstrahlenganges; diese Achse wird am dichroitischen Strahlteiler aus der optischen Achse des Beleuchtungsstrahlenganges abgelenkt. Der Detektionsstrahlengang kann gegebenenfalls einen Umlenkspiegel enthalten. Der Detektionsstrahlengang umfasst ein Kantenfilter und eine Sammellinse, die das Licht in ihrem ausgangsseitigen Brennpunkt sammelt.

Sofern eine weiße oder eine spektral unsaubere monochromatische Lichtquelle benutzt wird, wird mit dem Bandpassfilter der für die Anregung der emittierten Strahlung geeignete Wellenlängenbereich ausgefiltert. Mit dem dichroitischen Strahlteiler wird das von einem zu untersuchenden Objekt, welches sich im Brennpunkt des Beleuchtungsstrahlenganges befindet, emittierte Licht und remittierte Beleuchtungslicht umgelenkt. Mit dem Kantenfilter (Langpassoder Kurzpassfilter) wird je nach Art der Benutzumg des miniaturisierten Spektrometers der geeignete Wellenlängenbereich herausgefiltert, in dem die Wellenlänge der von dem zu untersuchenden Objekt emittierten Strahlung liegt.

Die Größe der Lichtquelle und ihre Wärmeentwicklung verlangen einen gewissen Abstand zwischen Lichtquelle und miniaturisiertem Spektrometer. Dieser Abstand wird im Allgemeinen mit einer Lichtleitfaser überbrückt. Das Licht wird bevorzugt über diese Lichtleitfaser zugeführt, deren Ende im Brennpunkt des Kollimators am Eintritt in den Beleuchtungsstrahlengang liegt.

Das von einem beleuchteten Objekt ausgehende Licht wird aus dem Detektionsstrahlengang bevorzugt über eine weitere Lichtleitfaser dem Eintrittsspalt des Spektrometers zugeführt. Der Anfang der weiteren Lichtleitfaser liegt im Brennpunkt der Sammellinse am Ausgang des Detektionsstrahlenganges.

Im Spektrometer wird das Spektrum der von einem beleuchteten Objekt emittierten Strahlung erzeugt. Das Spektrum kann auf einem Bildschirm visuell betrachtet werden, oder es kann auf elektronischem Wege ausgewertet und dargestellt werden.

In DE 100 10 514 (STEAG microparts und Forschungszentrum Karlsruhe) ist ein optoelektronisches Mikrospektrometer als hybrid integrierte Funktionseinheit beschrieben. Das Mikrospektrometer enthält einen Eintrittsspalt, einen planaren Wellenleiter für das einfallende und für das spektral zerlegte Licht, ein selbstfokussierendes Reflexionsgitter sowie weitere optische Funktionselemente. Das spektral zerlegte Licht fällt auf eine Diodenzeile, von der das Spektrum zu einer Auswertungseinheit geführt wird.

Damit stellt sich die Aufgabe, ein miniaturisiertes konfokales Spektrometer anzugeben, das deutlich kleiner ist als bekannte miniaturisierte Spektrometer, und das möglichst kompakt gebaut ist. Das miniaturisierte Spektrometer soll keine nachträgliche Justierung durch den Benutzer erfordern. Das miniaturisierte Spektrometer soll auch zur Untersuchung von Objekten geeignet sein, die eine geringe Konzentration der zu detektierenden Substanz (Moleküle oder Atome) enthalten, und die eine nur geringe Strahlungsdosis vertragen oder die wärmeempflindlich sind. Ferner soll es mobil und unter erschwerten Bedingungen einsetzbar sein und von ungeübten Personen benutzt werden können.

Das erfindungsgemäße miniaturisierte konfokale Spektrometer für die Spektraluntersuchung einer von einem optisch aktiven Objekt emittierten Strahlung umfasst folgende Baugruppen:
- eine Lichtquelle, deren Strahlung auf ein zu untersuchendes Objekt gerichtet ist, und dort die Emissionsstrahlung anregt; und
- einen Beleuchtungsstrahlengang, der mit einem Detektionsstrahlengang gekoppelt ist; der ausgangsseitige Brennpunkt des Beleuchtungsstrahlenganges ist identisch mit dem eingangsseitigen Brennpunkt des Detektionsstrahlenganges (konfokale Anordnung); und
- ein bekanntes Mikrospektrometer als eine der Baugruppen des miniaturisierten konfokalen Spektrometers.

Die Lichtquelle kann eine konventionelle thermische Lichtquelle sein, oder eine derbekannten Laserlichtquellen. Die Strahlung der Lichtquelle wird im eingangsseitige Brennpunkt des Beleuchtungsstrahlenganges gesammelt.

Der Beleuchtungsstrahlengang umfasst eine Sammellinse an seinem Eingang, gegebenenfalls ein Bandpassfilter, einen dichroitischen Strahlteiler und eine Sammellinse an seinem Ausgang. Mit dem Bandpassfilter kann aus der Strahlung der Lichtquelle ein gewünschter Spektralbereich ausgefiltert werden, der zur Anregung der Emissionsstrahlung des Objektes geeignet ist.

Der dichroitische Strahlteiler ist gegen die optische Achse des Beleuchtungstrahlenganges geneigt. Der Neigungswinkel des Strahlteilers gegen die optische Achse des Beleuchtungsstrahlenganges kann von 30° bis 60° betragen. Die optische Achse des Detektionsstrahlenganges wird damit um einen Winkel von 60° bis 120°, bevorzugt von 90°, aus der optischen Achse des Beleuchtungsstrahlenganges umgelenkt.

Die Strahlung der Lichtquelle wird im ausgangsseitigen Brennpunkt des Beleuchtungsstrahlenganges gesammelt. Das zu untersuchende Objekt ist in der Umgebung dieses Brennpunktes angeordnet. Die Beleuchtungsstrahlung regt eine Emissionsstrahlung des Objektes an.

Der Detektionsstrahlengang beginnt am ausgangsseitigen Brennpunkt des Beleuchtungsstrahlenganges und passiert die Sammellinse am Ausgang des Beleuchtungsstrahlenganges. Mit dem dichroitischen Strahlteiler wird die vom zu untersuchenden Objekt ausgehende Emissionsstrahlung aus dem Beleuchtungsstrahlengang umgelenkt.

Im Detektionsstrahlengang ist ein Kantenfilter (Langpassfilter oder Kurzpassfilter) angeordnet. Die Lage der Filterkante wird auf die Wellenlänge der zu untersuchenden Emissionsstrahlung abgestimmt. Die vom zu untersuchenden Objekt emittierte Strahlung wird mittels einer Sammellinse am Ausgang des Detektionsstrahlenganges auf den Eintrittsspalt des Mikrospektrometers geleitet.

Der Eingang des Detektionsstrahlenganges stimmt vom konfokalen Brennpunkt bis zum dichroitischen Strahlteiler mit dem Ausgang des Beleuchtungsstrahlenganges überein.

Im Mikrospektrometer wird das Spektrum der durch den Eintrittsspalt eintretenden Emissionsstrahlung des untersuchten Objektes erzeugt. Das Mikrospektrometer umfasst bevorzugt ein selbstfokussierendes korrigiertes Reflexionsgitter mit unsymmetrischen dreickigen Furchen. Das Spektrum liegt bevorzugt auf einer Diodenzeile, mit der es ausgelesen und ausgewertet wird.

Falls eine thermische Lichtquelle benutzt wird, befindet sich in der Umgebung des eingangsseitigen Brennpunktes des Beleuchtungsstrahlenganges eine Spaltblende mit einem länglichen Spalt. Die Strahlung der thermischen Lichtquelle wird auf den Spalt in der Spaltblende fokussiert.

Die Spaltblende befindet sich im oder in der Nähe des eintrittsseitigen Brennpunktes der Sammellinse des Beleuchtungsstrahlenganges. Damit entsteht ein Strahlenbündel, dessen Querschnitt die Form einer länglichen Ellipse hat. Der Spalt in der Spaltblende kann von 10 bis 100 Mikrometer breit und von 50 bis 500 Mikrometer hoch sein. Der Querschnitt des aus dem Spalt austretenden Lichtbündels hat die Form einer länglichen Ellipse. Das Längenverhältnis der beiden Hauptachsen der Ellipse kann von 2 zu 1 bis 10 zu 1 betragen.

Als Diodenlaser-Lichtquelle kann ein Dioden-Kantenstrahler verwendet werden, bevorzugt mit stabilisierter Wellenlänge.. Eine die Beleuchtungsstrahlung emittierende Fläche des Kantenstrahlers wird in der Umgebung des eingangsseitigen Brennpunktes des Beleuchtungsstrahlenganges angeordnet. Die Strahlerfläche kann 2 bis 5 Quadratmikrometer groß sein. In diesem Fall sind weder eine Fokussierungseinrichtung für die vom Kantenstrahler ausgehende Strahlung noch eine Spaltblende erforderlich.

Der Kantenstrahler erzeugt ein divergierendes Lichtbündel. Die Divergenzwinkel des Strahlenbündels sind in zwei Richtungen des Strahlenbündelquerschnitts unterschiedlich groß. Dadurch erhält das Strahlenbündel einen länglichen elliptischen Querschnitt. Das Längenverhältnis der beiden Hauptachsen der Ellipse kann von 2 zu 1 bis 10 zu 1 betragen.
Bei einem Kantenstrahler als Lichtquelle wird keine Spaltblende benutzt.

Bei beiden Lichtquellen hat das in den Beleuchtungsstrahlengang eintretende Strahlenbündel einen länglichen elliptischen Querschnitt, mit dem am Ausgang des Beleuchtungsstrahlenganges ein elliptischer Lichtfleck auf dem zu untersuchenden Objekt erzeugt wird. Das Objekt emittiert eine Strahlung, deren Spektrum zu untersuchen ist. Die vom Objekt emittierte Strahlung hat eine andere Wellenlänge als die über den Beleuchtungsstrahlengang einfallende Anregungsstrahlung. Ein Teil dieser emittierten Strahlung tritt in Richtung auf die Sammellinse am Ausgang des Detektionsstrahlenganges aus dem zu untersuchenden Objekt aus. Das emittierte Strahlenbündel hat ebenfalls einen länglichen elliptischen Querschnitt. Dieses Strahlenbündel passiert die Sammellinse am Ausgang des Beleuchtungsstrahlenganges und fällt auf den dichroitischen Strahlteiler, welcher das emittierte Strahlenbündel inden Detektionsstrahlengang umlenkt. Durch die Sammellinse am Ausgang des Detektionsstrahlenganges wird das vom Objekt emittierte Strahlenbündel mit elliptischem Querschnitt auf den Eintrittspalt des Mikrospektrometers geleitet.

Die große Hauptachse des elliptischen Querschnittes des Strahlenbündels, das auf den Eintrittsspalt des Mikrospektrometers fällt, verläuft parallel zur Längsachse des Eintrittsspaltes. Der Eintrittsspalt des Mikrospektrometers wird bevorzugt vollständig und in seiner gesamten Fläche annähernd gleichmäßig ausgeleuchtet. Der elliptische Querschnitt des Strahlenbündels ist bevorzugt nur wenig größer als die Fläche des Eintrittsspaltes. Damit bleibt der Lichtstrom der emittierten Strahlung, die in den Detektionsstrahlengang eingetreten ist, annähernd verlustfrei erhalten.

Diese Bedingung wird erfüllt, wenn (während des Zusammensetzens der drei Baugruppen) der Kantenstrahler oder die Spaltblende und damit die Richtung der großen Hauptachse des Strahlenbündels mit elliptischen Querschnitt entsprechend ausgerichtet wird.

Die Sammellinsen im Beleuchtungsstrahlengang und im Detektionsstrahlengang können konventionelle refraktive geschliffene einzelne Sammellinsen oder jeweils ein konventionelles System aus refraktiven geschliffenen Linsen aus optischem Glas oder Kunststoff sein. Statt dessen können diffraktive Linsen (Fresnelsche Zonenplatten) als Sammellinsen verwendet werden. Weiter können Glasstäbchen mit plan geschliffenen Enden und mit radialem Gradienten des Brechungsindex (GRIN-Linsen) als Sammellinsen verwendet werden. Der typische Durchmesser der GRIN-Linsen beträgt von 0,5 bis 5 Millimeter, und die typische Länge beträgt von 2 bis 20 Millimeter.

Beim Zusammensetzen der drei Baugruppen (Beleuchtungsseinheit, Beleuchtungsstrahlengang mit Detektionsstrahlengang, und Mikrospektrometer mit Ausleseeinheit) werden diese optisch justiert und starr miteinander verbunden.

Der dichroitische Strahlteiler kann aus zwei 45 Grad-Prismen zusammengesetzt sein. Auf die innere Fläche eines der Prismen ist der dichroitische Teilerspiegel aufgebracht (zum Beispiel durch Bedampfen). Die inneren Flächen der beiden Prismen liegen aufeinander. Weiter kann der dichroitische Strahlteilerspiegel auf eine transparente Platte aufgebracht sein, die zwischen den inneren Flächen beider Prismen liegt.

Der dichroitische Strahlteiler aus zwei 45 Grad-Prismen erlaubt eine sehr kompakte Bauweise und erleichtert die Zusammensetzung des optischen Systems bei Verwendung von GRIN-Linsen und plattenförmigen Filtern.

Das Mikrospektrometer hat ein selbstfokussierendes - und bevorzugt korrigiertes - Reflexionsgitter. Das Reflexionsgitter hat bevorzugt dreieckförmige unsymmetrische Furchen. Der Eintrittsspalt des Mikrospektrometers liegt im Brennpunkt der Sammellinse am Ausgang des Detektionsstrahlenganges oder in der nahen Umgebung dieses Brennpunktes. Das am Reflexionsgitter erzeugte Spektrum fällt bevorzugt auf eine Diodenzeile.

Das Beleuchtungsbündel mit dem Querschnitt einer länglichen Ellipse erzeugt auf dem zu untersuchenden Objekt am ausgangsseitigen Brennpunkt des Beleuchtungsstrahlenganges einen Lichtfleck mit elliptischem Querschnitt. Das in diesem Lichtfleck von dem Objekt emittierte Strahlenbündel hat ebenfalls einen elliptischen Querschnitt. Dieser elliptische Lichtfleck wird über den Detektionsstrahlengang auf dem Eintrittsspalt des Mikrospektrometers abgebildet. Die große Hauptachse des elliptischen Querschnitts des Stahlenbündels im Detektionsstrahlengang verläuft parallel zu der Längsachse des Eintrittsspaltes des Mikrospektrometers.

Der Eintrittsspalt des Mikrospektrometers ist vollständig und annähernd gleichmäßig von der Strahlung, die das untersuchte Objekt emittiert hat, ausgeleuchtet. Die Querschnittsfläche des Strahlenbündels auf dem Eintrittsspalt ist nur wenig größer als die Fläche des Eintrittspaltes. Die von dem untersuchten Objekt emittierte Strahlung, die durch die Sammellinse am Eingang des Detektionsstrahlenganges aufgenommen wird, wird mit einem nur geringen Verlust auf dem Eintrittsspalt des Spektrometers gebündelt. Der Eintrittsspalt ist vollständig ausgeleuchtet.

Der Eintrittsspalt des Mikrospektrometers ist typischerweise von 10 bis 100 Mikrometer breit und von 150 bis 500 Mikrometer hoch.

Die Baugruppen des miniaturisierten Spektrometers umfassen die Beleuchtungseinheit, die optischen Bauteile für den Beleuchtungsstrahlengang, die optischen Bauteile für den Detektionsstrahlengang, das Mikrospektrometer mit konkavem Reflexionsgitter und mit - bevorzugt elektronischer - Ausleseeinheit für das Spektrum. Diese Baugruppen werden während des Zusammenbaues optisch justiert. Sie werden starr miteinander und dauerhaft verbunden. Das miniaturisierte Spektrometer ist - vom Benutzer aus gesehen - ein "einstückiges" Gerät. Typische äußere Abmessungen sind 20 Millimeter Breite, 60 Millimeter Länge und 10 Millimeter Dicke.

Das miniaturisierte Spektrometer kann bevorzugt verwendet werden für die Untersuchung eines Objektes, das unter Einwirkung der einfallenden Anregungsstrahlung eine Strahlung mit anderer Frequenz emittiert, zum Beispiel als Raman-Strahlung oder als Fluoreszensstrahlung. Es ist speziell geeignet zur Untersuchung lichtschwacher Emissionsquellen, zum Beispiel für die an einer Oberfläche verstärkte Raman-Streuung (SERS, surface-enhanced Raman spectroscopy), bevorzugt an mikroskopisch kleinen Objekten.

Das erfindungsgemäße miniaturisierte konfokale Spektrometer hat folgende Vorteile:
- Das von der Lichtquelle in den Beleuchtungsstrahlengang eintretende Strahlenbündel mit elliptischen Querschnitt fällt vollständig auf das zu untersuchende Objekt. Das Objekt emittiert ein Strahlenbündel mit elliptischem Querschnitt, das den Eintrittsspalt des Mikrospektrometers gleichmäßig ausleuchtet, jedoch neben diesem Eintrittsspalt nur eine geringe Intensität hat.
- Es wird nur eine solche Emissionsstrahlung nach räumlicher Verteilung und nach Intensität erzeugt,wie für die Ausleuchtung des Eintrittsspaltes des Mikrospektrometers erforderlich ist.
- Die starr miteinander verbundenen Baugruppen sind gegeneinander optimal und bleibend justiert und dauerhaft fixiert.
- Die optische Empfindlichkeit des erfindungsgemäßen miniaturisierten Spektrometers ist um den Faktor 10 bis 100 größer als die Empfindlichkeit eines faserbasierten miniaturisierten Spektrometers.
- Das miniaturisierte Spektrometer ist wegen des quasimonolithischen Aufbaus mechanisch und thermisch robust im Gebrauch.
- Es ist kostengünstig in großer Stückzahl herzustellen und kann bei der Herstellung an einen vorgesehenen speziellen Verwendungszweck angepaßt werden.
- Aktiv-optische Justierprozesse während der Montage werden vermieden oder erfordern nur einen geringen Aufwand.
- Das Strahlenbündel mit elliptischem Querschnitt wird verlustarm über das zu untersuchende Objekt auf den Eintrittsspalt des Mikrospektrometers geleitet. Die bei faserbasierten Sonden unvermeidbaren Übertragungsverluste treten nicht auf.
- Die Strahlungsverluste der von einem Objekt emittierten Strahlung am Eintrittsspalt des Mikrospektrometers sind gering.
- Die leistungsarme Beleuchtung ermöglich die weitere Miniaturisierung der bekannten miniaturisierten Spektrometer und ergibt eine geringere thermische Belastung des zu untersuchenden Objektes
- Wegen kurzer Übertragungswege ist das Risiko für das Auftreten parasitärer Spektren gering. Diese können durch Wechselwirkung der Beleuchtungsstrahlung mit Material.(zum Beispiel mit einer lichtleitenden Faser) entstehen.
- Bei Verwendung eines Diodenlasers kann im Einzelfall auf die typischerweise notwendige Filterung des Laserlichtes im Beleuchtungsstrahlengang verzichtet werden.
- Es ist besonders geeignet für eine Mikroanalytik vor Ort, zum Beispiel für die Point of Care- Diagnostik.
- Auch Objekte mit extrem kleinem Volumen im Bereich weniger Mikroliter oder Objekte mit extrem kleiner Masse im Bereich von Bruchteilen eines Milligrammes können untersucht werden.
- Das miniaturiserte Spektrometer ist geeignet für die Mikrospektralanalyse kleiner Substanzmengen sowie für die Spurenanalyse von Atomen oder Molekülen, die in einem Objekt in sehr geringer Konzentration vorliegen.

Das erfindungsgemäße miniaturisierte Spektrometer wird an Hnad der folgenden Figuren weiter erläutert.

Fi.g 1 zeigt eine Prinzipdarstellung eines miniaturisierten Spektrometers nach dem Stand der Technik. Die Strahlung der Lichtquelle (101) wird mittels der Lichtleitfaser (102) zum eingangsseitigen Brennpunkt (103) der Sammellinse (104) des Beleuchtungsstrahlenganges geleitet. Im Beleuchtungsstrahlengang kann ein Bandpassfilter (105) vorhanden sein. Das Licht gelangt durch den gegen die optische Achse des Beleuchtungsstrahlenganges geneigten dichroitischen Strahlteiler (106) auf die Sammellinse (107) am Ausgang des Beleuchtungsstrahlenganges. Die Beleuchtungsstrahlung wird im ausgangsseitigen Brennpunkt (108) des Beleuchtungsstrahlenganges gesammelt. An diesem Brennpunkt wird ein zu untersuchendes Objekt (109) angebracht.

Die Beleuchtungsstrahlung kann Atome oder Moleküle im Objekt anregen. Die vom Objekt emittierte Strahlung, zum Beispiel Raman-Streustrahlung oder Fluoreszenzstrahlung, ist die Detektionsstrahlung. Diese geht von dem Objekt im konfokalen Brennpunkt (108) aus und tritt in den Detektionsstrahlengang ein. Von der Sammellinse (107) am Eingang des Detektionsstrahlengang trifft die Detektionsstrahlung auf den dichroitischen Strahlteiler (106). Der Strahlteiler lenkt gemeinsam mit dem Umlenkspiegel (110) die Detektionsstrahlung um. In der dargestellten Anordnung läuft die optische Achse des Detektionsstrahlenganges beispielsweise parallel zur optischen Achse des Beleuchtungsstrahlenganges.

Im Detektionsstrahlengang sind weiter ein Kantenfilter (111) sowie eine Sammellinse (112) am Ende des Detektionsstrahlenganges angebracht. Die Sammellinse (112) sammelt die emittierte Strahlung in ihrem Brennpunkt (113). Vom Brennpunkt (113) aus wird die Detektionsstrahlung mittels einer Lichtleitfaser (114) zum Eintrittsspalt des Spektrometers (115) geleitet.

Der Beleuchtungsstrahlengang reicht von der Lichtquelle (101) bis zum konfokalen Brennpunkt (108). Der Detektionsstrahlengang reicht vom konfokalen Brennpunkt (108) bis zum Spektrometer (115).

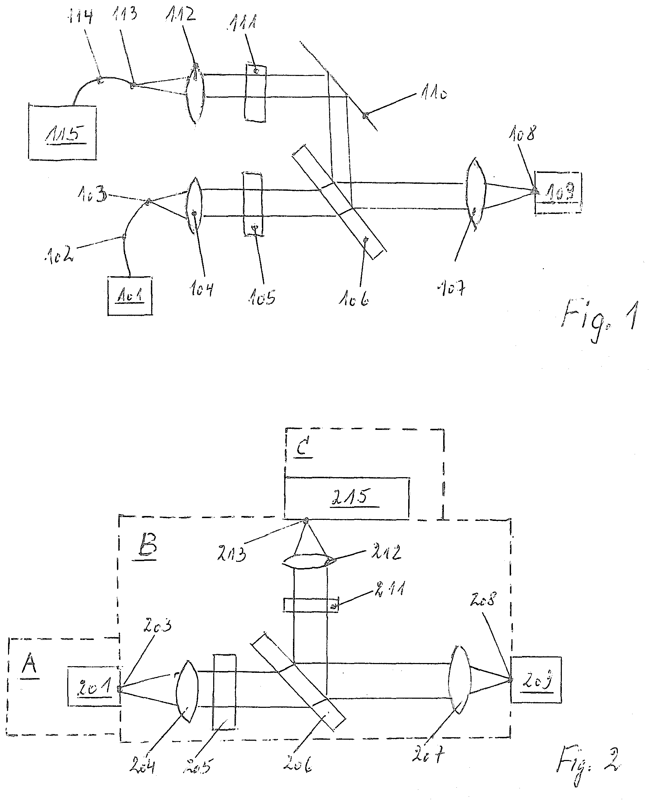

Fig. 2 zeigt eine beispielhafte Anordnung der optischen Bauteile des erfindungsgemäßen miniaturisierten Spektrometers. Das Licht einer Lichtquelle (201) wird im Brennpunkt (203) mittels einer Fokussiereinrichtung gesammelt. Im Brennpunkt (203) ist eine Spaltblende angeordnet. Der Brennpunkt (203) ist gleichzeitig der eingangsseitige Brennpunkt der Sammellinse (204) am Eingang des Beleuchtungsstrahlenganges. Im Beleuchtungsstrahlengang kann ein Bandpassfilter (205) vorhanden sein. Über den dichroitischen Strahlteiler (206) wird die Beleuchtungsstrahlung zur Sammellinse (207) geleitet. Diese Sammellinse sammelt die Beleuchtungsstrahlung im ausgangsseitigen Brennpunkt (208) des Beleuchtungsstrahlenganges. Dort wird das zu untersuchende Objekt (209) angeordnet.

Die vom Objekt (209) emittierte Strahlung, zum Beispiel Raman-Streustrahlung oder Fluoreszenzstrahlung, ist die Detektionsstrahlung. Diese geht von dem Objekt im konfokalen Brennpunkt (208) aus und tritt in den Detektionsstrahlengang ein. Von der Sammellinse (207) am Eingang des Detektionsstrahlenganges trifft die Detektionsstrahlung auf den dichroitischen Strahlteiler (206). Der Strahlteiler lenkt die Detektionsstrahlung aus dem Beleuchtungsstrahlengang ab. Über ein Kantenfilter (211) trifft die Detektionsstrahlung auf die Sammellinse (212) am Ausgang des Detektionsstrahlenganges. Diese Sammellinse sammelt die Detektionsstrahlung im Brennpunkt (213), an dem der Eintrittsspalt des Mikrospektrometers (215) liegt.

Die Baugruppen des miniaturisierten Spektrometers sind die Lichtquelle (A), der Beleuchtungsstrahlengang (B) und das Mikrospektrometer (C).

Erfindungsgemäss wird als Lichtquelle eine Laser-Diode verwendet. Deren Austrittsfenster wird im Brennpunkt (203) angeordnet. In diesem Fall ist keine Spaltblende erforderlich.

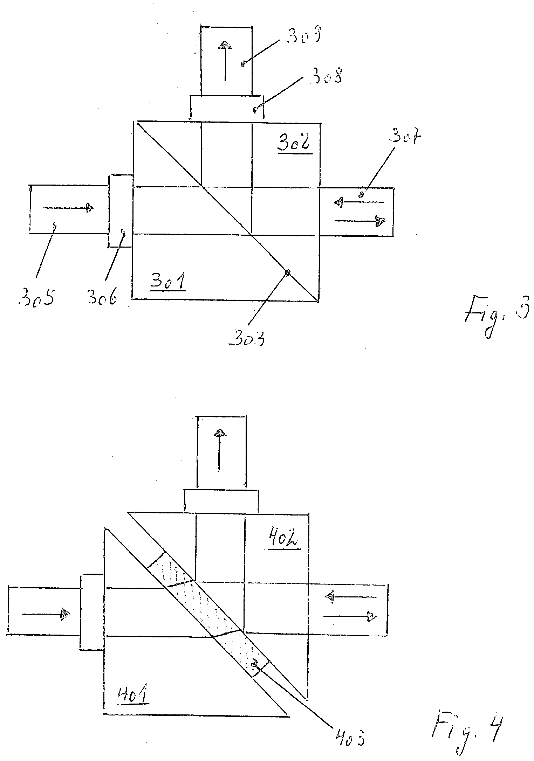

Fig.3 zeigt eine Ausführungsform eines dichroitischen Strahlteilers (206). Diese Ausführung umfasst zwei 45 Grad-Prismen (301 und 302), deren innere Flächen (303) aufeinander liegen. Bevorzugt eine dieser Flächen trägt eine optisch aktive Beschichtung. Eine GRIN-Linse (305) und ein Bandpassfilter (306) befinden sich am Eingang in den Beleuchtungsstrahlengang, vordem die Lichtquelle in der Baugruppe (A) liegt. Eine GRIN-Linse (307) bildet den Ausgang des Beleuchtungsstrahlenganges, vor dem sich das Objekt befindet. An der Strahlteiler-Innenfläche (303) wird die vom Objekt emittierte Strahlung in den Detektionsstrahlengang umgelenkt. Durch das Kantenfilter (308) und eine GRIN-Linse (309) fällt die emittierte Strahlung auf den Eintrittsspalt des Mikrospektrometers in der Baugruppe (C).

Fig. 4 zeigt eine andere Ausführungsform des dichroitischen Strahlteilers. Zwischen den beiden 45 Grad-Prismen (401 und 402) befindet sich eine Platte (403), die auf einer ihrer Flächen eine dichroitische Schicht trägt.

Die Größe der Figuren gibt keinen Hinweis auf die erheblichen Unterschiede in der Größe zwischen einem erfindungsgemäßen miniaturisierten Spektrometer und einem miniaturisierten Spektrometer nach dem Stand der Technik.

## Patentansprüche

1. Konfokales Spektrometer, umfassend eine Beleuchtungsvorrichtung mit einer Lichtquelle (201), einen Beleuchtungsstrahlengang mit je einer Sammellinse (204, 207) an seinem Eingang und am Ausgang, einen Detektionsstrahlengang mit je einer Sammellinse (207,212) an seinem Eingang und seinem Ausgang, wobei die Sammellinse (207) am Ausgang des Beleuchtungsstrahlenganges identisch ist mit der Sammellinse am Eingang eines Detektionsstrahlenganges wodurch eine konfokale Anordnung mit drei Sammellinsen gebildet wird, einen dichroitischen Strahlteiler (206), der im Teilungspunkt des Beleuchtungsstrahlenganges und des Detektionsstrahlenganges angeordnet ist, sowie ein Mikrospektrometer (215) mit einem Eintrittspalt und einer Beobachtungsvorrichtung für das Spektrum einer von einem zu untersuchenden Objekt ausgehenden Strahlung, wobei das zu untersuchende Objekt im Nahbereich des gemeinsamen Brennpunktes (208) des Beleuchtungsstrahlenganges und des Detektionsstrahlenganges anzuordnen ist, **gekennzeichnet durch**
• eine Laser-Diode als Lichtquelle (201), deren divergierendes Strahlenbündel einen länglichen elliptischen Querschnitt hat, das in den Beleuchtungsstrahlengang eintritt und auf dem zu untersuchenden Objekt einen elliptischen Beleuchtungsfleck erzeugt, von dem ein Strahlenbündel mit einem elliptischen Querschnitt ausgeht, das in den Detektionsstrahlengang eintritt und auf dem Eintrittspalt des Mikrospektrometers (215) fällt, und die große Hauptachse des elliptischen Strahlenbündels in der Längsachse des Eintrittsspaltes des Mikrospektrometers (215) verläuft, und die kleine Hauptachse durch den Mittelpunkt des Eintrittsspaltes des Mikrospektrometers (215) verläuft, und
• die Bauelemente und Baugruppen - umfassend die Beleuchtungsvorrichtung, den Beleuchtungsstrahlengang, den Detektionsstrahlengang und das Mikrospektrometer (215) mit Ausleseeinheit - gegeneinander bleibend justiert und starr, dauerhaft und unveränderbar miteinander verbunden sind.

2. Konfokales Spektrometer nach Anspruch 1, wobei
• die Lichtquelle (201) ein Dioden-Kantenstrahler ist, dessen Licht emittierende Fläche im Brennpunkt (203) der Sammellinse (204) am Eingang des Beleuchtungsstrahlenganges angeordnet ist.

3. Konfokales Spektrometer nach Anspruch 2, wobei
• die Licht emittierende Fläche des Kantenstrahlers von 2 bis 5 Quadratmikrometer groß ist, und
• Das Längenverhältnis der großen Hauptachse zur kleinen Hauptachse des elliptischen Bündelquerschnitts von 2 zu 1 bis 10 zu 1 beträgt.

4. Konfokales Spektrometer nach Anspruch 1, wobei
• die kleine Hauptachse des elliptischen Beleuchtungsflecks auf dem zu untersuchenden Objekt von 10 bis 100 Mikrometer lang ist und die große Hauptachse von 50 bis 500 Mikrometer lang ist.

5. Konfokales Spektrometer nach Anspruch 1, wobei
• der Umlenkwinkel zwischen den optischen Achsen des Beleuchtungs- und des Detektionsstrahlenganges am Strahlteiler (206) von 60 Grad bis 120 Grad, bevorzugt von 80 Grad bis 100 Grad, speziell von 90 Grad beträgt.

6. Konfokales Spektrometer nach Anspruch 1, wobei
• ein Bandpassfilter (205) im Beleuchtungsstrahlengang angeordnet ist.

7. Konfokales Spektrometer nach Anspruch 1, wobei
• ein Kantenfilter (211) im Detektionsstrahlengang angeordnet ist.

8. Konfokales Spektrometer nach Anspruch 1, wobei
• die Sammellinsen (204, 207, 212) zylindrisch sind und einen radialen Gradienten des Brechungsindex haben (Gradientenindexlinsen, GRIN-Linsen).

9. Konfokales Spektrometer nach Anspruch 1, wobei
• die Sammellinsen (204, 207, 212) konventionelle refraktive Linsen sind.

10. Konfokales Spektrometer nach Anspruch 1, wobei
• die Sammellinsen (204, 207, 212) diffraktive Linsen (wie Fresnelsche Zonenplatten) sind.

11. Konfokales Spektrometer nach Anspruch 1, wobei
• der Strahlteiler (206) eine transparente Platte mit teilweise reflektierender Oberfläche ist.

12. Konfokales Spektrometer nach Anspruch 1, wobei
• der Strahlteiler (206) zwei transparente Prismen umfasst, deren größte Flächen aufeinander liegen, und eine dieser Flächen eine teilweise reflektierende Fläche ist.

13. Konfokales Spektrometer nach Anspruch 1, wobei
• der Strahlteiler (206) eine transparente Platte mit teilweise reflektierender Oberfläche ist, und die Platte zwischen den inneren Flächen zweier Prismen liegt.

14. Konfokales Spektrometer nach Anspruch 1, wobei
• der Eintrittsspalt des Mikrospektrometers (215) von 250 bis 500 Mikrometer hoch und von 30 bis 100 Mikrometer breit ist.

15. Konfokales Spektrometer nach Anspruch 1, wobei
• das Mikrospektrometer (215) ein selbstfokussierendes Reflexionsgitter mit bevorzugt dreieckförmigen unsymmetrischen Furchen hat.

16. Konfokales Spektrometer nach Anspruch 1, wobei
• Die Beobachtungsvorrichtung für das Spektrum der von dem Objekt ausgehenden Strahlung eine Photodiodenzeile mit angeschlossener elektronischer Auslesevorrichtung ist.

## Claims

1. Confocal spectrometer, comprising an illumination device with a light source (201), an illuminating beam path having a converging lens (204, 207) at its input and output, a detecting beam path having a converging lens (207, 212) at its input and output, wherein the converging lens (207) at the output of the illuminating beam path is identical to the converging lens at the input of the detecting beam path, whereby a confocal arrangement with three converging lenses is formed, a dichroic beam splitter (206) arranged at a split-up point of the illuminating beam path and the detecting beam path, and a microspectrometer (215) having an entry slit and a detecting device for the spectrum of the radiation emitted by an object that is to be examined, wherein the object that is to be examined is to be arranged in in the vicinity of the common focal point (208) of the illuminating beam path and the detecting beam path, **characterised by**:
• a laser diode as the light source (201), the divergent beam pencil of which has an elongate elliptical cross section, enters the illuminating beam path and forms an elliptical light spot on the object which is to be examined, wherein a beam pencil with an elliptical cross section comes from the light spot, enters the detecting beam path and falls on the entry slit of the microspectrometer (215), and has a large main axis of the elliptical beam pencil extending along the longitudinal axis of the entry slit of the microspectrometer (215) and a small main axis extending through the centre of the entry slit of the microspectrometer (215), and
• the parts and subassemblies being permanently set with respect to one another and being rigidly and durably and unchangeably joined together, the parts and subassemblies comprising the illuminating device, the illuminating beam path, the detecting beam path and the microspectrometer (215) with read-out unit.

2. Confocal spectrometer according to claim 1, wherein:
• the light source (201) is a diode edge emitter the light emitting plane of which is arranged in the focal point (203) of the converging lens (204) at the input of the illuminating beam path.

3. Confocal spectrometer according to claim 2, wherein:
• the light emitting plane of the edge emitter has an extent of 2 to 5 square micrometers, and
• the length ratio of the large main axis to the small main axis of the elliptical pencil cross-section is from 2:1 to 10:1.

4. Confocal spectrometer according to claim 1, wherein
• the small main axis of the elliptical light spot on the object which is to be examined has a length ranging from 10 to 100 micrometers and the large main axis has a length ranging from 50 to 500 micrometers.

5. Confocal spectrometer according to claim 1, wherein
• the deflection angle between the optical axes of the illumination and detection beam paths at the dichroic beam splitter (206) is from 60° to 120°, preferably from 80° to 100°, particularly 90°.

6. Confocal spectrometer according to claim 1, wherein
• a band pass (205) filter is arranged in the illuminating beam path.

7. Confocal spectrometer according to claim 1, wherein
• an edge filter (211) is arranged in the detecting beam path.

8. Confocal spectrometer according to claim 1, wherein
• the converging lenses (204, 207, 212) are cylindrical and have a radial gradient of the refractive index (gradient index lenses, GRIN lenses).

9. Confocal spectrometer according to claim 1, wherein
• the converging lenses (204, 207, 212) are conventional refractive lenses.

10. Confocal spectrometer according to claim 1, wherein
• the converging lenses (204, 207, 212) are detractive lenses (such as Fresnel zone plates).

11. Confocal spectrometer according to claim 1, wherein
• the beam splitter (206) is a transparent plate with a partially reflective surface.

12. Confocal spectrometer according to claim 1, wherein
• the beam splitter (206) comprises two prisms, the inner surfaces of the two prisms being located on one another, and wherein one of these surfaces is a partially reflective surface.

13. Confocal spectrometer according to claim 1, wherein
• the beam splitter (206) is applied to a transparent plate with a partially reflective surface and the plate is located between the inner surfaces of two prisms.

14. Confocal spectrometer according to claim 1, wherein
• the entry slit of the microspectrometer (215) is from 250 to 500 microns high and from 30 to 100 microns wide.

15. Confocal spectrometer according to claim 1, wherein
• the microspectrometer (215) has a self-focusing reflection grating with preferably triangular asymmetrical grooves.

16. Confocal spectrometer according to claim 1, wherein
• the detecting device for the spectrum of the radiation emitted by the object is a line of diodes with an electronic read-out device connected thereto.

## Revendications

1. Spectromètre confocal comprenant un dispositif d'éclairage avec une source de lumière (201), une trajectoire de rayon d'éclairage avec une lentille convexe (204, 207) au niveau de son entrée et au niveau de sa sortie, une trajectoire de rayon de détection avec une lentille convexe (207, 212) au niveau de son entrée et de sa sortie, dans lequel
la lentille convexe (207) au niveau de la sortie de la trajectoire de rayon d'éclairage est identique à la lentille convexe au niveau de l'entrée d'une trajectoire de rayon de détection, par quoi un agencement confocal avec trois lentilles convexes est formé, un diviseur de faisceau (206) dichroïque qui est agencé dans le point de séparation de la trajectoire de rayon d'éclairage et de la trajectoire de rayon de détection, ainsi qu'un microspectromètre (215) avec une fente d'entrée et un dispositif d'observation pour le spectre d'un rayonnement sortant d'un objet à examiner, dans lequel
l'objet à examiner est à agencer dans la zone proche du foyer (208) commun de la trajectoire de rayon d'éclairage et de la trajectoire de rayon de détection, **caractérisé par**
- une diode laser comme source de lumière (201), dont le faisceau divergent présente une section transversale elliptique oblongue, qui entre dans la trajectoire de rayon d'éclairage et génère sur l'objet à examiner une tache d'éclairage elliptique, de laquelle sort un faisceau avec une section transversale elliptique, qui entre dans la trajectoire de rayon de détection et tombe sur la fente d'entrée du microspectromètre (215), et le grand axe principal du faisceau elliptique s'étend dans l'axe longitudinal de la fente d'entrée du microspectromètre (215), et le petit axe principal s'étend par le point médian de la fente d'entrée du microspectromètre (215), et
- les éléments et modules - comprenant le dispositif d'éclairage, la trajectoire de rayon d'éclairage, la trajectoire de rayon de détection et le microspectromètre (215) avec une unité de lecture - sont ajustés en restant les uns contre les autres et reliés entre eux de manière rigide, durable et inaltérable.

2. Spectromètre confocal selon la revendication 1, dans lequel
- la source de lumière (201) est un laser à émission latérale de diode, dont la surface émettant la lumière est agencée dans le foyer (203) de la lentille convexe (204) au niveau de l'entrée de la trajectoire de rayon d'éclairage.

3. Spectromètre confocal selon la revendication 2, dans lequel
- la surface émettant la lumière du laser à émission latérale présente une taille de 2 à 5 micromètres carré, et
- le rapport de longueur du grand axe principal au petit axe principal de la section transversale de faisceau elliptique est de 2 à 1 à 10 à 1.

4. Spectromètre confocal selon la revendication 1, dans lequel
- le petit axe principal de la tache d'éclairage elliptique sur l'objet à examiner présente une longueur de 10 à 100 micromètres et le grand axe principal présente une longueur de 50 à 500 micromètres.

5. Spectromètre confocal selon la revendication 1, dans lequel
- l'angle de déviation entre les axes optiques de la trajectoire de rayon d'éclairage et de détection sur le séparateur de faisceau (206) est de 60 degrés à 120 degrés, de préférence de 80 degrés à 100 degrés, spécialement de 90 degrés.

6. Spectromètre confocal selon la revendication 1, dans lequel
- un filtre de bande passante (205) est agencé dans la trajectoire de rayon d'éclairage.

7. Spectromètre confocal selon la revendication 1, dans lequel
- un filtre d'arête (211) est agencé dans la trajectoire de rayon de détection.

8. Spectromètre confocal selon la revendication 1, dans lequel
- les lentilles convexes (204, 207, 212) sont cylindriques et présentent un gradient radial de l'indice de réfraction (lentilles d'indice de gradient, lentilles GRIN).

9. Spectromètre confocal selon la revendication 1, dans lequel
- les lentilles convexes (204, 207, 212) sont des lentilles réfractives conventionnelles.

10. Spectromètre confocal selon la revendication 1, dans lequel
- les lentilles convexes (204, 207, 212) sont des lentilles diffractives (telles que des plaques de zone de Fresnel).

11. Spectromètre confocal selon la revendication 1, dans lequel
- le séparateur de faisceau (206) est une plaque transparente avec une surface partiellement réfléchissante.

12. Spectromètre confocal selon la revendication 1, dans lequel
- le séparateur de faisceau (206) comporte deux prismes transparents dont les plus grandes surfaces se trouvent l'une sur l'autre, et une de ces surfaces est une surface partiellement réfléchissante.

13. Spectromètre confocal selon la revendication 1, dans lequel
- le séparateur de faisceau (206) est une plaque transparente avec une surface partiellement réfléchissante, et la plaque se trouve entre les surfaces intérieures de deux prismes.

14. Spectromètre confocal selon la revendication 1, dans lequel
- la fente d'entrée du microspectromètre (215) présente une hauteur de 250 à 500 micromètres et une largeur de 30 à 100 micromètres.

15. Spectromètre confocal selon la revendication 1, dans lequel
- le microspectromètre (215) présente une grille de réflexion à mise au point automatique avec des sillons non symétriques de préférence triangulaires.

16. Spectromètre confocal selon la revendication 1, dans lequel
- le dispositif d'observation pour le spectre du rayonnement sortant de l'objet est une ligne de photodiodes avec un dispositif de lecture électronique raccordé.
